# EUROPEAN PATENT SPECIFICATION

(11) **EP 3 214 926 B1**
(45) Date of publication and mention of the grant of the patent: **22.04.2020**
(21) Application number: 15808783.3
(22) Date of filing: 02.11.2015
(51) Int. Cl.: A01J 7/02

(54) **AIR INJECTOR FOR MILKING PLANTS**
LUFTINJEKTOR FÜR MELKANLAGEN
INJECTEUR D'AIR POUR INSTALLATIONS DE TRAITE

(30) Priority: 05.11.2014 IT TO20140914
(43) Date of publication of application: 13.09.2017
(73) Proprietor: Interpuls S.P.A., 42020 Albinea (RE) (IT)
(72) Inventor: NICOLINI, Gabriele, I-42020 Albinea (re) (IT); SICURI, Roberto, I-42020 Albinea (re) (IT)
(74) Representative: Robba, Pierpaolo
(86) International application number: PCT/IB2015/058455
(87) International publication number: WO 2016/071820

(56) References cited:
- GB-A- 2 062 179
- GB-A- 2 316 290

## Description

### Technical Field

The present invention relates to an air injector for milking plants which is used for injecting air into a milking plant during washing of said plant.

More particularly, the air injector is arranged to make controlled quantities of air flow into the milking plant in order to create turbulence within the washing fluid for the plant.

### Prior Art

In the field of milking plants it is known to use air injectors for obtaining thorough washing of the milking plant.

In breeding farms for dairy animals, a thorough washing of the plant, subsequent to its use, is considered fundamental to the protection of the plant components, the hygiene of the milked milk and the health of the animals coming into contact with the parts of the plant.

In order to obtain a suitable and effective washing of the plant, in addition to using a washing solution having appropriate characteristics in terms of concentration of the detergent or acid and water temperature, it is necessary that the aqueous solution exerts a mechanical action against the pipes and components which make up the plant and with which said solution comes into contact, and that such action is effective even in the case of particularly low levels of vacuum of the milking plant.

In order to increase the mechanical action exerted by the aqueous solution in known milking plants, a device called "air injector" is inserted, which device, being electrically controlled, cyclically makes controlled quantities of air flow into the plant, said air quantities creating turbulence within the solution with which they come into contact, due to the bubbles forming therein; the air injector during the washing step cyclically injects with a desired frequency controlled quantities of air into the pipes of the milking plant.

Air injection is obtained by the movement of a membrane, in turn generated by the alternating presence of vacuum and atmospheric air above the membrane.

Such air becomes mixed with the aqueous washing solution present in the same pipe, thus generating a two-phase fluid because of the presence of air bubbles trapped in the washing solution. During the path of the two-phase mixture inside the pipes, the air bubbles collide against the surfaces of the pipes and components with which they inevitably come into contact, generating a mechanical action of rubbing against said pipes and components by breaking upon collision.

However, the devices of the above type have several drawbacks.

A drawback is caused by the difficulty to obtain a rapid movement of the membrane, such as to cyclically inject at high frequency small quantities of air into the pipes of the plant during its washing cycle, thus generating a highly turbulent motion of the washing fluid for the plant.

Another drawback is the fact that a high energy consumption is required in order to generate a rapid movement of the membrane.

A further drawback is caused by the fact that the device has remarkable overall dimensions, which complicate installation, especially on particularly compact plants.

GB 2 062 179 discloses a valve assembly for milking plants, which valve assembly comprises a first housing member connectable to a vacuum line and defining a first chamber, a second housing member defining a second chamber, a flexible diaphragm mounted between the first and second housing members to separate the first and second chambers, the diaphragm being movable between an unflexed position and a flexed position in response to forces exerted on opposite sides thereof and a valve for placing said first chamber in communication with the atmosphere through one or more openings in the first housing when said diaphragm is in its flexed position and for cutting off the first chamber from the atmosphere when said diaphragm is in its unflexed position. According to the disclosure of GB 2 062 179, this valve is mounted on the membrane and, more precisely, it comprises a disc contacting a first side of the membrane and a supporting counter-plate on the second, opposite side of said membrane.

### Summary of the Invention

One object of the present invention is to provide an air injector that is able to inject at high frequency air into the pipes of the plant, thus generating a highly turbulent motion of the washing fluid.

Another object of the present invention is to provide an air injector that functions with low energy consumption.

A further object of the present invention is to provide an air injector which has reduced overall dimensions.

These and other objects are achieved by the present invention by providing an air injector according to the appended claims.

It is to be understood that the appended claims are an integral part of the technical teaching provided herein in the present disclosure of the invention.

### Brief Description of the Drawings

Further features and advantages of the present invention will become more apparent from the following detailed description, given merely by way of non-limiting example, with reference to the annexed drawings, in which:
- Figure 1 is a sectional view of an air injector according to the present invention;
- Figure 2 is a perspective view of a detail of an air injector according to the present invention; and
- Figure 3 is a perspective view of a detail of an air injector according to the present invention.

### Description of a Preferred Embodiment

Referring to the Figures, there is illustrated an exemplary embodiment of an air injector 10 for milking plants according to an embodiment of the present invention.

The air injector 10 comprises a lower body 11 having an air inlet opening 12 for inletting air into the plant, a membrane 14 supportedly mounted on the air inlet opening 12 and a tight-sealed lower chamber 25 inferiorly delimited by the membrane 14 and superiorly delimited by an upper body or cover 15; preferably, the air inlet opening 12 has a rounded rim 13 against which the membrane 14 rests.

The membrane 14 is connected to the lower body 11, preferably it is held between the lower body 11 and the upper body 15 so as to tightly seal the lower chamber 25 and is formed in known manner, for example is made of silicone, with a convoluted profile which is necessary to enable the membrane to effect a travel so as to open and close the air inlet opening 12.

The lower body 11 constitutes the supporting structure of the air injector 10 and comprises, in its upper portion, a membrane seat 18 adapted to house the membrane 14, whereas its lower portion is preferably constituted by a cylindrical duct 16 ending in the air inlet opening 12 and being connectable to a washing line of the milking plant, for example by means of a rubber sleeve.

Preferably suction openings 21 are provided in the membrane seat 18 for sucking atmospheric air to be inlet into the milking plant, said openings being separated from the outside through a filter 22 suitable for retaining impurities present in the inlet air, and a shutter, which is intended for regulating the flow rate of the incoming air and is controlled for instance by rotating a ferrule 19 fixed thereto and manually operable, is provided between the filter 22 and the suction openings 21.

Preferably, the filter 22 is located in the lower portion of the air injector 10 and is protected from the jets of washing water for the plant. The air injector 10 of the invention further includes, in sequence from the top, the suction openings 21, arranged in the lower body 11, for sucking the atmospheric air to be inlet into the plant, an annular chamber 20 being provided beneath said openings and being arranged between the lower body 11, the ferrule 19 and a first containment grid 32 of the sponge filter 22. The filter 22, consisting of an annular ring of sponge material having the same diameters as the first containment grid 32 with which it comes into contact, is arranged between the first containment grid 32, which is superposed on the filter 22, and a second containment grid 33 located underneath, in order to create a real barrier against the dirt contained in the air passing through the filter. Preferably, the first containment grid 32 is press-fitted on the second containment grill 33, which in turn is retained on the cylindrical duct 16 by virtue of absence of mechanical clearance between the parts.

The membrane 14 is supportedly mounted on the air inlet opening 12 and its opening and closing movement cyclically inlets atmospheric air into in the milking plant through the air inlet opening 12; the air that is inlet into the plant is the same air coming from the adjacent suction openings 21, which are adjustable by acting on the rotatable ferrule 19.

The air injector 10 comprises a coil 23 comprising a mobile core 24 and preferably a control card for the coil 23; the coil 23 and the control card are housed in the upper body 15 and are protected by a hood mounted in a tight sealing manner on the underlying upper body or cover 15, so as to prevent any accidental penetration of water into the card seat, for instance during washing of the environments in which the milking plant is installed, which would cause short-circuiting of the system. The tight-sealing is obtained for instance by providing the hood with a gasket which is compressed onto the upper body 15 with which it comes into contact during its fixing on the product; the control card and the coil 23 are powered by means of a low voltage power cable, this cable, too, being protected in a known manner, for instance by means of sealing gaskets, against undesired penetration of water.

In particular the coil 23, the movable core 24 and the control card are housed on the surface of the upper body 15 that is opposite to the one delimiting the lower chamber 25. In a known manner, the control card comprises a microcontroller which can be programmable or non-programmable and is connected to a display having the function of displaying the value of the preset parameters.

The coil 23 is provided with a coil through hole 26 formed in its upper portion, a cylindrical seat 27 housing the movable core 24 extending beneath said upper portion, still in its internal part; the coil hole 26 connects the cylindrical seat 27 to the outside.

Preferably, the coil 23 has a power lower than 3.2 W and comprises a metal insert which is inserted in its upper portion and in which the coil through-hole 26 is formed; according to the invention, the metal insert is inserted in the upper portion of the cylindrical seat 27.

The movable core 24 in turn is constituted by a metal cylinder movable in the cylindrical seat 27 and for example made of steel of the same type as the metal insert mentioned above, and preferably comprises a protruding plastic plug 28 connected to each of its two ends. In the upper body 15, beneath the coil 23, there is provided a tight-sealed upper chamber 35, obtained for example with a sealing gasket of the O-ring type, said chamber being superiorly delimited by the coil 23 and being connected to the outside through the coil hole 26 by means of the cylindrical seat 27 connected to the upper chamber 35.

The upper chamber 35 has its size, in particular its volume, smaller than that of the lower chamber 25 and has a width smaller than the width of the coil 23; preferably, the upper chamber 35 has a circular section with a diameter smaller than the diameter of the coil 23, in particular smaller than 20.5 mm.

The upper body 15 further comprises a first hole 29 having a small diameter, preferably smaller than 2 mm, which connects the upper chamber 35 to a vacuum duct 36.

The mobile core 24 and preferably the plastic plug 28 connected thereto rests on the first hole 29, which is open or close depending on whether the mobile core 24 is lifted from the coil or not.

When the mobile core 24 rests on the first hole 29, thus closing it, the coil hole 26 is open and the atmospheric air can freely pass from the coil hole 26 to a gap provided between the cylindrical seat 27 and the mobile core 24, so as to arrive to the upper chamber 35; conversely, when the mobile core 24 is lifted, the coil hole 26 is closed by the mobile core 24, or preferably by the plastic plug 28, and the first hole 29 is open, as will be described in more detail below; preferably, the coil hole 26 connects the upper chamber 35 to the outside through the cylindrical seat 27 of the coil.

The first hole 29, on which the mobile core 24 rests when it is in its rest position, ends in the vacuum duct 36 connected to the vacuum pipe of the milking plant; therefore, when the vacuum pump is working and the mobile core 24 is lifted, the first hole 29 and the vacuum duct 36 allow to create vacuum in the upper chamber 35.

The first hole 29 and the vacuum duct 36 are provided in the upper chamber 15. Preferably, the upper chamber 35 has a substantially round shape and the first hole 29 is provided at the center of the upper chamber 35; in a preferred manner, the vacuum duct 36 is horizontal and is formed by portions of different diameter.

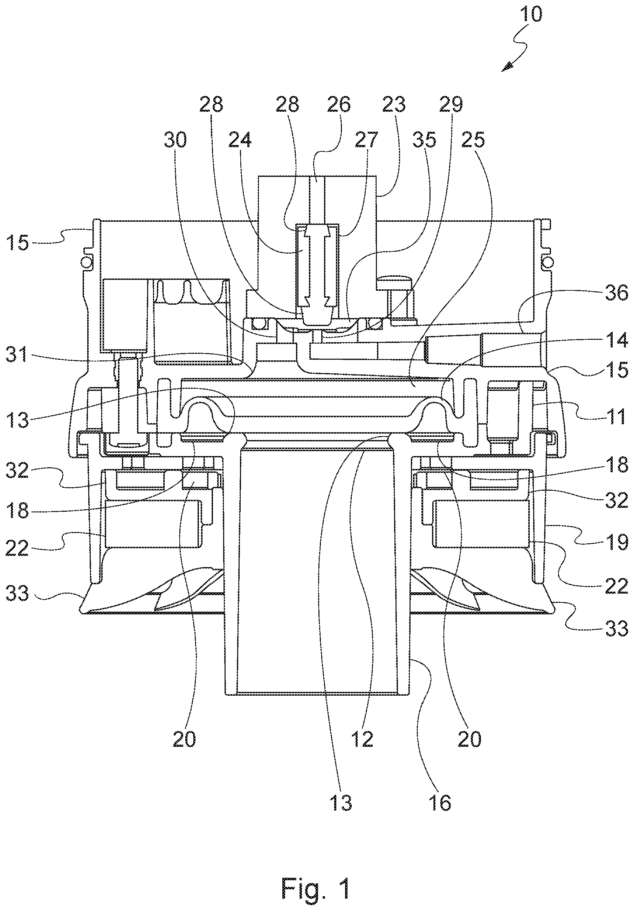

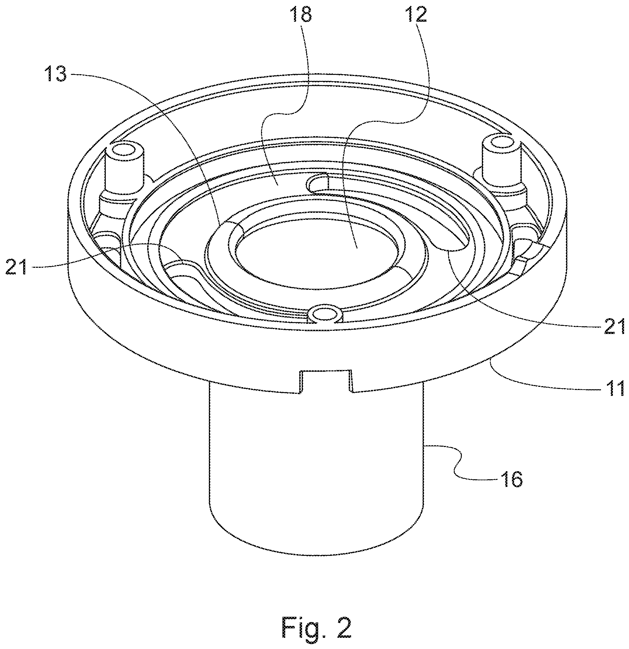

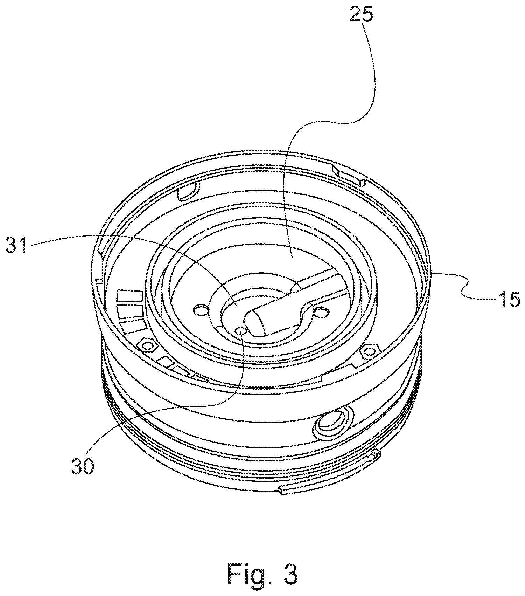

The upper body 15 further comprises a second hole 30 provided in the upper chamber 35 and connecting the upper chamber 35 to an annular connecting chamber 31 that is an integral part of the chamber 25, shown in Figure 3, in which the cover 15 is shown upside down with respect to how it is shown in Figures 1 and 2; the annular connecting chamber 31 in turn is an integral part of the lower chamber 25; therefore, when the mobile core 24, in its rest position, closes the first hole 29 and opens the coil hole 26, the annular connecting chamber 31 and the second hole 30 allow to connect the lower chamber 25 to the outside, thus bringing said lower chamber to the atmospheric pressure.

The second hole 30 and the annular connecting chamber 31 are provided in the upper body 15. Preferably, the second hole 30 is provided on the periphery of the upper chamber 35, next to the first hole 29; in a preferred manner, the annular connecting chamber 31 is cylindrical and has a diameter greater than that of the second hole 30.

The operation of the air injector 10 of the invention is as follows.

During the washing cycle, the air injector 10 cyclically inlets at high frequency small quantities of air into the milking plant through the air inlet opening 12, by virtue of the alternating opening and closing movement of the membrane 14.

The air is inlet into the plant with the same power supply frequency as the coil 23 and thus generates an extremely turbulent motion inside the piping of the plant; the power supply frequency is generated by an external power supply, or by a control card housed in the upper body 15, if the control card is programmable.

The motion imparted to the membrane 14 is generated by the action of the vacuum alternated to the atmospheric air within the lower chamber 35 which is arranged above the membrane 14.

The presence of air at atmospheric pressure or of vacuum in the lower chamber 25 is obtained by opening and closing alternately at the desired frequency the coil hole 26, which connects the upper chamber 35 to the outside, and the first hole 29, which connects the upper chamber 35 to the vacuum duct 36 connected to the vacuum pipe of the milking plant.

By energizing the coil 23 and de-energizing the same alternately the mobile core 24 is displaced so as to open or close the coil hole 26 and the first hole 29, in order to allow inflow of atmospheric air into or vacuum creation in the upper chamber 35 and in the lower chamber 25 connected thereto through the second hole 30 and the annular connecting chamber 31.

During its operation, the membrane 14 therefore moves from a rest position in which its lower side is in contact with the rim 13 of the air inlet opening 12 through which the air injector 10 inlets air into the plant while atmospheric air is present in the lower chamber 25, to a working position in which the membrane 14 is lifted and detached from the air inlet opening 12 on which it was resting before, thus connecting the suction openings 21 for sucking atmospheric air to the air inlet opening 12 so as to inlet air into the milking plant, and the lower chamber 25 is under negative pressure and not at atmospheric pressure.

When the coil 23 is not energized, the movable core 24 is located in its rest position in the lower portion of its cylindrical seat 27 in which it can slide, and closes the first hole 29 connected to the vacuum duct 36 and to the vacuum pipe of the plant. When the movable core 24 rests on the first hole 29, in its rest position, the coil hole 26 is open and connects the inside of the coil to the inside of the hood which is at atmospheric pressure. Consequently, also the upper chamber 35 and the lower chamber 25, connected thereto through the second hole 30 and the annular connecting chamber 31, are at atmospheric pressure, thus maintaining the membrane 14 resting on the air inlet opening 12 and preventing entrance of air into the milking plant.

When the coil is energized, the metal insert with through hole incorporated in it is magnetized and attracts to itself the movable core 24, lifting it from the rest position in which it rests on the first hole 29 that serves as a vacuum source. When lifted, the movable core 24 opens the first hole 29 fed with vacuum, while closing the coil hole 26 which communicates with the atmospheric air external to the coil itself. In this way, the upper chamber 35 located beneath the coil 23 is put under vacuum together with the lower chamber 25 delimited by the membrane 14, as said lower chamber 25 is in communication with the upper chamber 35 through the second hole 30 and the annular connecting chamber 31. The membrane 14, being subjected to the action of vacuum in its upper portion, is lifted, thus opening the underlying air inlet opening 12 on which it has been resting until now; the surrounding air which has been inlet into the air injector 10 through the filter 22, the annular chamber 20 and the suction openings 21 then enters through the air inlet opening 12 now open and, passing beneath the membrane 14, becomes mixed with the washing solution circulating inside the pipes of the milking. The coil will stay energized for a very short time, quantifiable in a few seconds, after which the power supply is interrupted.

Advantageously, the air injector of the invention allows to obtain a rapid movement of the membrane and a consequent high frequency of air injection into the pipes of the plant during the washing cycle, thus generating a highly turbulent motion of the washing fluid for the plant.

Another advantage is given by the fact that a low energy consumption is required to generate a rapid movement of the membrane.

A further advantage is brought by the limited overall dimensions of the device, which allow easy installation thereof in the milking plant.

Of course embodiments and embodiment details may be widely varied with respect to what has been described and illustrated merely as a non-limiting example. The scope of the present invention is defined by the appended claims.

## Claims

1. Air injector (10) for milking plants comprising:
- a lower body (11) having an air inlet opening (12) for inletting air into the milking plant;
- a membrane (14) supportedly mounted on the air inlet opening (12);
- a tight-sealed lower chamber (25) inferiorly delimited by the membrane (14) and superiorly delimited by an upper body (15);
- a coil (23) housed in the upper body (15) and comprising a mobile core (24) and a coil hole (26) connected to the outside;
- a tight-sealed upper chamber (35) which is formed in the upper body (15), is superiorly delimited by the coil (23) and is connected to the outside through the coil hole (26),
wherein the upper body (15) comprises a first hole (29) communicating the upper chamber (35) with a vacuum duct (36) connected to a vacuum pipe of the milking plant, and wherein the upper body (15) comprises a second hole (30) formed in the upper chamber (35), wherein said second hole (30) leads into an annular connecting chamber (31) connected to the lower chamber (25), said mobile core being adapted to move from a rest position, in which it closes the first hole (29) and opens the coil hole (26), to a position in which the mobile core (24) is lifted and opens the first hole (29) while closing the coil hole (26), so as to let air flow into or create vacuum in the upper chamber (35) and in the lower chamber (25) connected thereto in order to generate a movement of the membrane (14), wherein the coil (23) comprises a cylindrical seat (27) in which the mobile core (24) is housed and which is connected to the upper chamber (35), wherein said coil hole (26) communicates the cylindrical seat (27) with the outside, and wherein the coil (23) comprises a metal insert which is inserted in the upper portion of the cylindrical seat (27) and in which the coil hole (26) is formed.

2. Air injector (10) according to claim 1, **characterized in that** the upper chamber (35) has a size smaller than that of the lower chamber (25) and has a width smaller than the width of the coil (23).

3. Air injector (10) according to claim 2, **characterized in that** the upper chamber (35) has a circular section with a diameter smaller than the diameter of the coil (23).

4. Air injector (10) according to any of the preceding claims, **characterized in that** the membrane (14) is held between the lower body (11) and the upper body (15) so as to tightly seal the lower chamber (25).

5. Air injector (10) according to any of the preceding claims, **characterized in that** the lower body (11) comprises, in its upper portion, a membrane seat (18) for housing the membrane (14), and **in that** suction openings (21) are provided in the membrane seat (18) for sucking atmospheric air to be inlet into the milking plant, said openings being separated from the outside through a filter (22) suitable for retaining impurities present in the inlet air.

6. Air injector (10) according to claim 5, **characterized in that** the membrane (14) supportedly mounted on the air inlet opening (12) is adapted, by virtue of its opening and closing movement, to cyclically inlet atmospheric air into the milking plant through the air inlet opening (12) itself, and **in that** the air that is inlet into the milking plant is the same air that comes from the suction openings (21) adjustable by acting on a rotatable ferrule (19).

7. Air injector (10) according to claim 5 or 6, **characterized in that** the filter (22) is arranged between a first containment grid (32) superposed on the filter (22) and a second containment grid (33) arranged beneath the filter (22).

8. Air injector (10) according to any of the preceding claims, **characterized in that** it comprises a control card for the coil (23), said control card being housed in the upper body (15) and protected together with the coil (23) by a hood mounted in a tightly-sealing manner on the underlying upper body (15), so as prevent water from entering the air injector (10).

9. Air injector (10) according to any of the preceding claims, **characterized in that** said vacuum duct (36) is horizontal and is formed by portions of different diameter.

10. Air injector (10) according to any of the preceding claims, **characterized in that** said second hole (30) is provided on the periphery of said upper chamber (35), next to said first hole (29).

11. Air injector (10) according to any of the preceding claims, **characterized in that** said air inlet opening (12) has a rounded rim (13) against which said membrane (14) rests.

## Patentansprüche

1. Luftinjektor (10) für Melkanlagen mit:
- einem unteren Körper (11), der eine Lufteinlassöffnung (12) zum Einlassen von Luft in die Melkanlage aufweist,
- einer Membran (14), die tragend an der Lufteinlassöffnung (12) montiert ist,
- einer abgedichteten unteren Kammer (25), die nach unten durch die Membran (14) und nach oben durch einen oberen Körper (15) begrenzt ist,
- einer Spule (23), die in dem oberen Körper (15) angeordnet ist und einen beweglichen Kern (24) sowie ein mit der Außenseite verbundenes Spulenloch (26) aufweist,
- einer abgedichteten oberen Kammer (35), die in dem oberen Körper (15) gebildet ist, nach oben durch die Spule (23) begrenzt ist und mit der Außenseite über das Spulenloch (26) in Verbindung steht,
wobei der obere Körper (15) ein erstes Loch (29) aufweist, das mit der oberen Kammer (35) über einen Anaugkanal (36) in Verbindung steht, der an eine Unterdruckleitung der Melkanlage angeschlossen ist, und wobei der obere Körper (15) ein zweites Loch (30) aufweist, das in der oberen Kammer (35) gebildet ist, wobei das zweite Loch (30) zu einer ringförmigen Verbindungskammer (31) führt, die an die untere Kammer (25) angeschlossen ist, wobei der bewegliche Kern dafür ausgelegt ist, sich aus einer Ruheposition, in der er das erste Loch (29) verschließt und das Spulenloch (26) öffnet, in eine Position zu bewegen, in welcher der bewegliche Kern (24) angehoben ist und das erste Loch (29) öffnet, während er das Spulenloch (26) schließt, sodass Luft in die obere Kammer (35) und in die daran angeschlossene untere Kammer (25) einströmen oder Unterdruck erzeugt werden kann, um die Bewegung der Membran (14) zu bewirken, wobei die Spule (23) einen zylindrischen Sitz (27) aufweist, in dem sich der bewegliche Kern (24) befindet und der an die obere Kammer (35) angeschlossen ist, wobei das Spulenloch (26) den zylindrischen Sitz (27) mit der Außenseite verbindet, und wobei die Spule (23) einen metallischen Einsatz aufweist, der in den oberen Abschnitt des zylindrischen Sitzes (27) eingesetzt ist und in dem das Spulenloch (26) gebildet ist.

2. Luftinjektor (10) nach Anspruch 1, **dadurch gekennzeichnet, dass** die obere Kammer (35) eine Größe hat, die kleiner als die der unteren Kammer (25) ist, und eine Breite hat, die kleiner als die Breite der Spule (23) ist.

3. Luftinjektor (10) nach Anspruch 2, **dadurch gekennzeichnet, dass** die obere Kammer (35) einen kreisförmigen Abschnitt mit einem Durchmesser hat, der kleiner als der Durchmesser der Spule (23) ist.

4. Luftinjektor (10) nach einem der vorstehenden Ansprüche, **dadurch gekennzeichnet, dass** die Membran (14) zwischen dem unteren Körper (11) und dem oberen Körper (15) gehalten ist, sodass sie die untere Kammer (25) abdichtet.

5. Luftinjektor (10) nach einem der vorstehenden Ansprüche, **dadurch gekennzeichnet, dass** der untere Körper (11) in seinem oberen Abschnitt einen Membransitz (18) zum Aufnehmen der Membran (14) aufweist, und dass Ansaugöffnungen (21) in den Membransitz (18) vorgesehen sind, um Umgebungsluft in den Einlass der Melkanlage zu saugen, wobei die Öffnungen von der Außenseite durch einen Filter (22) getrennt sind, der dafür geeignet ist, in der Ansaugluft vorhandene Verunreinigungen zurückzuhalten.

6. Luftinjektor (10) nach Anspruch 5, **dadurch gekennzeichnet, dass** die Membran (14), die tragend an der Lufteinlassöffnung (12) montiert ist, dafür ausgelegt ist, mittels ihre Öffnungs- und Schließbewegung zyklisch Umgebungsluft durch die Lufteinlassöffnung (12) in die Melkanlage selbst hineinzulassen, und dass die Luft, die in die Melkanlage eingelassen wird, dieselbe Luft ist, die von den Ansaugöffnungen (21) kommt, die durch Einwirkung auf eine drehbare Hülse (19) einstellbar sind.

7. Luftinjektor (10) nach Anspruch 5 oder 6, **dadurch gekennzeichnet, dass** der Filter (22) zwischen einem ersten Haltegitter (32), das über dem Filter (22) angeordnet ist, und einem zweiten Haltegitter (33), das unter dem Filter (22) angeordnet ist, liegt.

8. Luftinjektor (10) nach einem der vorstehenden Ansprüche, **dadurch gekennzeichnet, dass** er eine Steuerkarte für die Spule (23) aufweist, wobei die Steuerkarte in dem oberen Körper (15) angeordnet und zusammen mit der Spule (23) durch eine Haube geschützt ist, die abgedichtet auf dem darunterliegenden oberen Körper (15) montiert ist, um das Eindringen von Wasser in den Luftinjektor (10) zu verhindern.

9. Luftinjektor (10) nach einem der vorstehenden Ansprüche, **dadurch gekennzeichnet, dass** der Ansaugkanal (36) horizontal ist und aus Abschnitten unterschiedlichen Durchmessers gebildet ist.

10. Luftinjektor (10) nach einem der vorstehenden Ansprüche, **dadurch gekennzeichnet, dass** das zweite Loch (30) im Umfang der ersten Kammer (35) neben dem ersten Loch (29) vorgesehen ist.

11. Luftinjektor (10) nach einem der vorstehenden Ansprüche, **dadurch gekennzeichnet, dass** die Lufteinlassöffnung (12) einen abgerundeten Rand (13) hat, an dem die Membran (14) anliegt.

## Revendications

1. Injecteur d'air (10) pour installations de traite comprenant :
- un corps inférieur (11) ayant une ouverture d'entrée d'air (12) pour l'entrée d'air dans l'installation de traite ;
- une membrane (14) montée supportée sur l'ouverture d'entrée d'air (12) ;
- une chambre inférieure étanche (25) délimitée de manière inférieure par la membrane (14) et délimitée de manière supérieure par un corps supérieur (15) ;
- une bobine (23) logée dans le corps supérieur (15) et comprenant un noyau mobile (24) et un trou de bobine (26) relié à l'extérieur ;
- une chambre supérieure étanche (35) qui est formée dans le corps supérieur (15), est délimitée de manière supérieure par la bobine (23) et est raccordée à l'extérieur par le biais du trou de bobine (26),
dans lequel le corps supérieur (15) comprend un premier trou (29) mettant en communication la chambre supérieure (35) avec un conduit de vide (36) raccordé à un tuyau de vide de l'installation de traite, et dans lequel le corps supérieur (15) comprend un second trou (30) formé dans la chambre supérieure (35), dans lequel ledit second trou (30) mène à une chambre de raccordement annulaire (31) raccordée à la chambre inférieure (25), ledit noyau mobile étant adapté pour se déplacer d'une position de repos, dans laquelle il ferme le premier trou (29) et ouvre le trou de bobine (26), à une position dans laquelle le noyau mobile (24) est levé et ouvre le premier trou (29) tout en fermant le trou de bobine (26), de façon à laisser l'air circuler ou à créer un vide dans la chambre supérieure (35) et dans la chambre inférieure (25) raccordée à celle-ci afin de générer un déplacement de la membrane (14), dans lequel la bobine (23) comprend un siège cylindrique (27) dans lequel le noyau mobile (24) est logé et qui est raccordé à la chambre supérieure (35), dans lequel ledit trou de bobine (26) met en communication le siège cylindrique (27) avec l'extérieur, et dans lequel la bobine (23) comprend une garniture métallique qui est insérée dans la portion supérieure du siège cylindrique (27) et dans laquelle le trou de bobine (26) est formé.

2. Injecteur d'air (10) selon la revendication 1, **caractérisé en ce que** la chambre supérieure (35) a une taille plus petite que celle de la chambre inférieure (25) et a une largeur plus petite que la largeur de la bobine (23).

3. Injecteur d'air (10) selon la revendication 2, **caractérisé en ce que** la chambre supérieure (35) a une section circulaire avec un diamètre plus petit que le diamètre de la bobine (23).

4. Injecteur d'air (10) selon l'une quelconque des revendications précédentes, **caractérisé en ce que** la membrane (14) est maintenue entre le corps inférieur (11) et le corps supérieur (15) de façon à étanchéifier la chambre inférieure (25).

5. Injecteur d'air (10) selon l'une quelconque des revendications précédentes, **caractérisé en ce que** le corps inférieur (11) comprend, dans sa portion supérieure, un siège de membrane (18) pour loger la membrane (14), et **en ce que** des ouvertures d'aspiration (21) sont prévues dans le siège de membrane (18) pour aspirer l'air atmosphérique pour son entrée dans l'installation de traite, lesdites ouvertures étant séparées de l'extérieur par le biais d'un filtre (22) approprié pour retenir des impuretés présentes dans l'air d'entrée.

6. Injecteur d'air (10) selon la revendication 5, **caractérisé en ce que** la membrane (14) montée supportée sur l'ouverture d'entrée d'air (12) est adaptée, grâce à son déplacement d'ouverture et de fermeture, pour permettre l'entrée cyclique d'air atmosphérique dans l'installation de traite par le biais de l'ouverture d'entrée d'air (12) elle-même, et **en ce que** l'air qui est entré dans l'installation de traite est le même air qui provient des ouvertures d'aspiration (21) réglables par action sur une férule rotative (19).

7. Injecteur d'air (10) selon la revendication 5 ou 6, **caractérisé en ce que** le filtre (22) est agencé entre une première grille de confinement (32) superposée sur le filtre (22) et une seconde grille de confinement (33) agencée au-dessous du filtre (22).

8. Injecteur d'air (10) selon l'une quelconque des revendications précédentes, **caractérisé en ce qu'**il comprend une carte de commande pour la bobine (23), ladite carte de commande étant logée dans le corps supérieur (15) et protégée conjointement à la bobine (23) par un capot monté de manière étanche sur le corps supérieur (15) sous-jacent, de façon à empêcher l'entrée d'eau dans l'injecteur d'air (10).

9. Injecteur d'air (10) selon l'une quelconque des revendications précédentes, **caractérisé en ce que** ledit conduit de vide (36) est horizontal et est formé par des portions de diamètre différent.

10. Injecteur d'air (10) selon l'une quelconque des revendications précédentes, **caractérisé en ce que** ledit second trou (30) est prévu sur la périphérie de ladite chambre supérieure (35), à proximité dudit premier trou (29).

11. Injecteur d'air (10) selon l'une quelconque des revendications précédentes, **caractérisé en ce que** ladite ouverture d'entrée d'air (12) possède un rebord arrondi (13) contre lequel repose ladite membrane (14).
